# EUROPÄISCHE PATENTSCHRIFT

(11) **EP 4 403 860 B1**
(45) Veröffentlichungstag und Bekanntmachung des Hinweises auf die Patenterteilung: **16.07.2025**
(21) Anmeldenummer: 24151190.6
(22) Anmeldetag: 10.01.2024
(51) Int. Cl.: F26B 25/04, F26B 9/08, C02F 11/16

(54) **ANLAGE ZUM TROCKNEN VON SCHLAMM SOWIE VERWENDUNG EINES SCHLAMMWENDERS IN EINER SOLCHEN ANLAGE**
INSTALLATION FOR DRYING SLUDGE AND USE OF A MUD TURNER IN SUCH AN INSTALLATION
INSTALLATION DE SÉCHAGE DE BOUES ET USAGE D'UN DISPOSITIF DE RETOURNEMENT DE BOUES DANS UNE TELLE INSTALLATION.

(30) Priorität: 23.01.2023 DE 102023101567
(43) Veröffentlichungstag der Anmeldung: 24.07.2024
(73) Patentinhaber: Huber SE, 92334 Berching (DE)
(72) Erfinder: Großer, Andre, 92318 Neumarkt (DE); Abt, Simon, 91177 Thalmässing (DE)
(74) Vertreter: Canzler & Bergmeier Patentanwälte Partnerschaft mbB

(56) Entgegenhaltungen:
- DE-A1- 102012 224 322
- DE-U1- 20 304 220
- DE-U1- 202016 004 012
- DE-U1- 29 814 380
- FR-A1- 2 930 175
- US-A1- 2012 017 461
- US-B2- 7 429 124

## Beschreibung

Die vorliegende Erfindung betrifft eine Anlage zum Trocknen von Schlamm, insbesondere von Klärschlamm, der bei der Abwasserbehandlung anfällt, wobei die Anlage eine, vorzugsweise rechteckige, Trocknungsfläche zur flächigen Aufnahme des Schlamms umfasst, wobei die Anlage einen verfahrbaren Schlammwender umfasst, der ausgebildet ist, den auf der Trocknungsfläche ausgebreiteten Schlamm zu wenden und hierbei zu durchmischen, wobei die Anlage einen ersten Fahrweg und einen zweiten Fahrweg aufweist, wobei die beiden Fahrwege zumindest teilweise auf gegenüberliegenden Längsseiten der Trocknungsfläche verlaufen und durch eine Abtrennung von der Trocknungsfläche abgetrennt sind, wobei der Schlammwender wenigstens ein erstes Rad und wenigstens ein zweites Rad aufweist, wobei die Räder an gegenüberliegenden Seiten einer gemeinsamen Brücke des Schlammwenders gelagert sind, welche die Trocknungsfläche in einer Querrichtung der Trocknungsfläche überspannt, und wobei beim Betrieb des Schlammwenders das erste Rad auf dem ersten Fahrweg und das zweite Rad auf dem zweiten als jeweilige Laufebene abrollt, sowie die Verwendung eines entsprechenden schlammwenders in einer solchen Anlage.

Aus der EP 0 680 791 A1 ist eine Vorrichtung zum Einbringen von gebranntem Kalk in eine Masse von Kohlenwasserstoffprodukten bekannt, welche eine rechteckige Grube, in die die Masse eingebracht wird und ein bewegliches Werkzeug, das sich oberhalb der Grube bewegt und das aus einer Kombination eines Drehwerkzeugs und eines Verteilungswerkzeugs besteht, das vorzugsweise unmittelbar vor oder nach dem Drehwerkzeug angeordnet ist, umfasst. Die Grube ist an mindestens einer ihrer langen Seiten mit einem Fahrweg versehen und die Grube und der Fahrweg sind durch zwei Brüstungen getrennt. Die Brüstungen dienen dazu, dass die Masse in der Grube gehalten wird. Sie können auch als Führung für das Fahrzeug dienen. Die Vorrichtung dient dementsprechend zur Herstellung von Dünger durch Mischung verschiedener Komponenten. Das Wenden von Klärschlamm zur gleichmäßigen und schnellen Trocknung des Klärschlamms wird in dieser Druckschrift nicht beschrieben. Außerdem ist nichts darüber zu entnehmen, wie das Fahrzeug geführt werden soll. Die Brüstungen dienen offenbar lediglich dazu, dass die Räder ähnlich einem Bordstein daran gehindert werden, versehentlich in die Grube zu fahren.

Aus der US 2012/0017461 A1 ist eine Schlammbehandlungsanlage bekannt, bei der auf einem langgestreckten Boden Schlammmasse ausgebreitet ist. Parallele Führungsschienen sind in Längsrichtung auf dem Boden angeordnet und ein beweglicher Wagen befindet sich quer über einer Arbeitsfläche eines Bodens. Die Bewegung des Wagens durch Längsverschiebung über den Boden wird durch eine erste Antriebswelle eingeleitet, die ein Zahnrad trägt, das mit einer Antriebskette kämmt. Eine zweite Kette dient zur Führung des Wagens. Auf dem Wagen befindet sich ein rotierendes Drehwerkzeug, das in den Schlamm eingreift. Es besteht aus Paaren von halbzylindrischen Schaufeln, die im Wesentlichen symmetrisch mit einer ihrer Kanten auf beiden Seiten einer angetriebenen Welle befestigt sind. Der bewegliche Wagen ruht mit seinen Rädern auf den Führungsschienen, um dem motorisierten Antrieb über den Boden durch das Kettenantriebssystem zu folgen. Die Schlammbehandlungsanlage umfasst auch mindestens ein Stabilisierungssystem mit einem Träger und einem Rad. Das Stabilisierungssystem wirkt mit der Führungsschiene zusammen und stützt sich auf dieser ab. Außerdem bewirkt das Rad eine Führung entlang der Führungsschiene und verhindert das "Schieflaufen" des beweglichen Wagens. Nachteilig ist die aufwändige Führungsschiene, die einerseits als Lauffläche die Last des Wagens aufnehmen muss und andererseits aber auch als Führungsschiene für den Wagen dienen muss. Zusätzlich sind Brüstungen erforderlich, auf denen die Führungsschienen angeordnet sind und welche die Schlammmasse auf dem Boden in dem Bereich halten, in dem sie gewendet werden kann.

Die FR 2 930 175 A1 offenbart einen Schlammwender mit einer Brücke, die eine Trocknungsfläche sowie die Trocknungsfläche begrenzende Mauern überspannt. Der Schlammwender berührt nicht die Mauern.

Bei den bisherigen auf dem Markt befindlichen Maschinen für die solare Klärschlammtrocknung, die eine Brückenkonstruktion nutzen, wird die Brücke in einem sauberen, von Schlamm ungestörtem Bereich auf einer Fahrmauer verfahren. Die Fahrebene für die Räder befindet sich oberhalb bzw. bis zur Höhe des Schlammbeetes. Dabei wird die Fahrmauer auch als Anschlagsvorrichtung für die Brückenmaschine genutzt. Die Erstellung der Fahrmauer, insbesondere auch eine Nachrüstung bestehender Anlagen mit einem modernen Schlammwender ist durch den Bau der Fahrmauer zeit- und kostenintensiv.

Aufgabe der vorliegenden Erfindung ist es somit eine Anlage zum Trocknen von Schlamm sowie einen Schlammwender zu schaffen, der einfach geführt und ohne aufwändige Bauarbeiten an der Trocknungsfläche oder dem Fahrweg betrieben werden kann.

Die Aufgabe wird gelöst durch eine Anlage zum Trocknen von Schlamm sowie die Verwendung eines Schlammwenders in einer solchen Anlage gemäß den unabhängigen Patentansprüchen.

Vorgeschlagen wird eine Anlage zum Trocknen von Schlamm, insbesondere von Klärschlamm, der bei der Abwasserbehandlung anfällt, wobei die Anlage eine, vorzugsweise rechteckige, Trocknungsfläche zur flächigen Aufnahme des Schlamms umfasst. Die Anlage umfasst außerdem einen verfahrbaren Schlammwender, der ausgebildet ist, den auf der Trocknungsfläche ausgebreiteten Schlamm zu wenden und hierbei zu durchmischen, wobei die Anlage einen ersten Fahrweg und einen zweiten Fahrweg aufweist. Die beiden Fahrwege verlaufen zumindest teilweise auf gegenüberliegenden Längsseiten der Trocknungsfläche und sind durch eine Abtrennung von der Trocknungsfläche abgetrennt. Der Schlammwender weist wenigstens ein erstes Rad und wenigstens ein zweites Rad auf, wobei die Räder an gegenüberliegenden Seiten einer gemeinsamen Brücke des Schlammwenders gelagert sind, welche die Trocknungsfläche in einer Querrichtung der Trocknungsfläche überspannt. Im Bereich der Brücke ist eine Wendeeinrichtung, in der Regel eine sich drehende Walze mit daran angeordneten Schaufeln angeordnet. Die Schaufeln greifen in den Schlamm ein und wenden den Schlamm, sodass durch die regelmäßige Umwälzung der Trocknungsvorgang des Schlamms beschleunigt wird. Der Schlammwender ist mit einem Antrieb versehen und bewegt sich auf den zumindest zwei Rädern entlang der Trocknungsfläche. Dabei rollt beim Betrieb des Schlammwenders das erste Rad auf dem ersten Fahrweg und das zweite Rad auf dem zweiten Fahrweg als jeweilige Laufebene ab. Die zumindest zwei Räder stützen den Schlammwender auf den Fahrwegen bzw. den Laufebenen ab.

Die Abtrennung umfasst im Bereich des ersten Fahrwegs eine sich in einer Fahrtrichtung des Schlammwenders erstreckende erste Führung und im Bereich des zweiten Fahrwegs eine sich in der Fahrtrichtung des Schlammwenders erstreckende zweite Führung für den Schlammwender. Der Schlammwender ist beim Verfahren entlang der Trocknungsfläche mit Hilfe der Führungen quer zur Fahrtrichtung geführt. Dabei wird sichergestellt, dass der Schlammwender bei seiner Fahrt im Wesentlichen quer zur Trocknungsfläche ausgerichtet bleibt, die Trocknungsfläche ständig überstreift und somit den kompletten, auf der Trocknungsfläche ausgelegten Schlamm wenden kann.

Die Führungen erstrecken sich ausgehend von der Trocknungsfläche nach oben und dienen als Barriere für den auf der Trocknungsfläche ausgebreiteten Schlamm, um Schlamm von den Fahrwegen fernzuhalten. Die erfindungsgemäßen Führungen haben den Vorteil, dass sie unmittelbar auf der Trocknungsfläche bzw. Bodenfläche der Anlage angeordnet werden können. Die Trocknungsfläche kann somit eben ausgeführt werden, wobei die Führungen lediglich auf der Trocknungsfläche bzw. Bodenfläche aufgesetzt werden. Eine besondere, aufwändige Gestaltung der Trocknungsfläche, um eine Führung für den Schlammwender zu ermöglichen, ist nicht erforderlich. Beim Bau der Anlage ist es somit ausreichend, dass eine sehr einfach gestaltete Trocknungsfläche bzw. Bodenfläche zur Verfügung gestellt wird, auf welcher die Führungen für den Schlammwender aufgesetzt werden. Dies ermöglicht einen einfachen, schnellen und kostengünstigen Bau der Anlage. Auch eine Nachrüstung des Schlammwenders auf eine bestehende Trocknungsfläche alter Anlagen ist damit einfach durchzuführen.

Darüber hinaus erfüllen die Führungen eine weitere Aufgabe, indem sie die Trocknungsfläche begrenzen. Die Führungen grenzen die Trocknungsfläche, auf welcher der Schlamm liegt, gegenüber dem Fahrweg für den Schlammwender ab. Damit wird einerseits gewährleistet, dass der Schlamm in dem Bereich verbleibt, in dem er auch gewendet werden kann, d. h. unterhalb der Brücke des Schlammwenders, in dem sich die Wendeeinrichtung befindet. Teile des Schlamms, welche nicht gewendet werden, weil sie außerhalb des Bereichs der Wendeeinrichtung des Schlammwenders liegen oder während des Wendevorgangs zu liegen kommen, werden damit vermieden. Eine gleichmäßige und schnelle Trocknung des Schlamms kann hierdurch erfolgen. Andererseits wird durch die Führungen auch gewährleistet, dass der Fahrweg für den Schlammwender sauber bleibt. Die Führungen stellen sicher, dass kein Schlamm in den Bereich des Fahrwegs gelangt und somit die Bewegung des Schlammwenders entlang der Trocknungsfläche stören könnte. Eine Reinigung des Fahrwegs ist somit nicht bzw. nur in großen Abständen durchzuführen. Die Wartung der Anlage wird somit ebenfalls vereinfacht.

Von Vorteil ist es, dass die Führungen jeweils durch ein ein- oder mehrteiliges Metallprofil gebildet sind, welches mit einer Bodenfläche einer Solartrocknungshalle , die gleichzeitig auch die Trocknungsfläche bildet, verbunden, vorzugsweise verschraubt ist. Die Verbindung erfolgt vorzugsweise lösbar, so dass die Führungen in ihrer Position eingestellt oder auch wieder einfach rückgebaut werden können. Das Metallprofil ist auf der Bodenfläche der Anlage montiert und kann dabei auf die individuellen Bedürfnisse und Maße des Schlammwenders angepasst werden. Bei Bedarf sind auch spätere Korrekturen möglich, um eine Justierung der Position der Führungen gegenüber dem Schlammwender vornehmen zu können. Die Herstellung und die Montage der Anlage zum Trocknen von Schlamm ist damit schnell und kostengünstig durchzuführen. Ein mehrteiliges Profil kann von Vorteil sein, wenn mehrere Führungsflächen erforderlich sind, um den Schlammwender positionsgenau führen zu können oder wenn die Befestigung am Boden eine individuelle Anpassung an die Bodenfläche erfordert und die eigentliche Führungsfläche standardisiert ausgeführt sein soll.

Vorteile bringt es mit sich, wenn das Metallprofil einen im Wesentlichen L-förmigen Querschnitt aufweist. Damit ist sowohl die Befestigung am Boden über einen Schenkel des L-förmigen Querschnitts als auch die Führung des Schlammwenders durch den anderen Schenkel des L-förmigen Querschnitts einfach umzusetzen.

Auch ist vorgesehen, dass die Bodenfläche, auf welcher die Führungen montiert sind, Teil der Anlage ist und die Trocknungsfläche und die Fahrwege bildet. Die Trocknungsfläche bzw. die Fahrwege sind in einem definierten, meist horizontalen und ebenen Zustand, sodass die Führungen darauf ebenfalls definiert montierbar sind.

Vorteilhaft ist es, wenn die Trocknungsfläche und die Fahrwege in derselben Ebene liegen, wobei die Ebene vorzugsweise eine vertikal verlaufende Normale aufweist. Die Fahrwege sind somit unter der Schlammbeethöhe angeordnet. Die Schlammbeethöhe ist die Höhe, in welcher der Schlamm über der Trocknungsfläche maximal angeordnet werden kann, so dass die Brücke mit der Wendeeinrichtung über den Schlamm hinwegfahren kann und den Schlamm vollständig wenden kann, ohne ihn aufzuschieben.

Vorteilhaft ist es auch, wenn der Schlammwender eine erste Führungsrolle aufweist, mit der er während des Verfahrens an der ersten Führung anliegt und/oder der Schlammwender eine zweite Führungsrolle aufweist, mit der er während des Verfahrens an der zweiten Führung anliegt. Die Führungsrollen positionieren den Schlammwender quer zur Trocknungsfläche und erlauben eine besonders reibungsarme Ausrichtung und Verfahrbarkeit des Schlammwenders auf seiner Fahrt entlang des Schlammbeetes bzw. der Trocknungsfläche.

Ebenso bringt es Vorteile mit sich, wenn die Führungsrollen jeweils eine vertikal oder schräg zur Vertikalen verlaufende Drehachse aufweisen. Mit einer vertikal verlaufenden Drehachse wird eine genaue Führung des Schlammwenders bewirkt. Sind die Führungsrollen schräg zur Vertikalen angeordnet, so ist gegebenenfalls stabilere Führung und eine Möglichkeit gegeben, dass der Schlammwender Hindernissen ausweichen kann und anschließend wieder in die ideale Position zurückgeführt wird.

In einer besonders vorteilhaften Ausführung der Erfindung weist der Schlammwender im Bereich des ersten Rads und im Bereich des zweiten Rads jeweils eine Schottwand auf, die in vertikaler Richtung mit jeweils einer der Führungen überlappen und in horizontaler Richtung einen Abstand zur jeweils benachbarten Führung aufweisen, dessen Betrag vorzugsweise zwischen 1 mm und 30 mm, insbesondere zwischen 3 mm und 20 mm, beträgt.

Durch das Zusammenwirken von Schottwand und Führung wird verhindert, dass Schlamm, insbesondere wenn er gewendet wird, aus dem Bereich der Trocknungsfläche in den Bereich der Führungseinrichtung und der Lauffläche gelangt und diese verschmutzen bzw. sogar den Betrieb der Anlage behindern könnte. Die Schottwand ist an dem Schlammwender angeordnet und wird zusammen mit dem Schlammwender entlang der Trocknungsfläche und der Führungen verfahren. Damit ist der Schutz vor Verschmutzung stets in dem Bereich vorhanden, in welchem Schlamm durch das Wenden aus dem vorgesehenen Bereich der Trocknungsfläche herausfallen könnte.

Vorteilhaft ist es zudem, wenn die Schottwände in einer quer zur Fahrtrichtung des Schlammwenders verlaufenden Richtung zwischen den Führungen angeordnet sind. Bei dieser Anordnung wird ein besonders guter Schutz vor Verschmutzung der Führungseinrichtung und der Fahrwege gewährleistet.

Vorteile bringt es zudem mit sich, wenn jeweils eine Führung zwischen einer Führungsrolle und einer Schottwand verläuft. Die Führung und die Schottwand schützen damit die Führungsrolle, welche zusammen mit der Fläche der Führung, an welcher die Führungsrolle abrollt, die Führungseinrichtung bildet, zuverlässig vor Verschmutzung.

Vorteilhaft ist es zudem, wenn der Schlammwender zumindest ein Räumschild zum Bewegen des sich auf der Trocknungsfläche befindlichen Schlamms aufweist. Das Räumschild bewirkt, dass der Schlamm weitgehend aus dem Bereich der Führungseinrichtung und des Fahrwegs abgehalten wird. Es ist an den Enden der Brücke bzw. im Bereich der seitlichen Ränder der Trocknungsfläche an dem Schlammwender angeordnet, untergreift den Schlamm in diesem Bereich und fördert ihn in Richtung zur Mitte der Trocknungsfläche. Hierdurch wird der Schlamm von der Wendeeinrichtung der Brücke sicher erfasst und kann mit dem übrigen Schlamm zuverlässig gewendet werden. Außerdem ist dadurch sichergestellt, dass der in dem Randbereich der Trocknungsfläche befindliche Schlamm nicht in Richtung auf die Führungseinrichtung und den Fahrweg fällt und diese verschmutzt.

Ebenso ist es vorteilhaft, wenn der Schlammwender einen Motor als Antrieb aufweist, welcher insbesondere mit wenigstens einem Rad in Wirkverbindung steht, um eine Bewegung des Schlammwenders entlang der Trocknungsfläche zu bewirken. Der Antrieb wirkt direkt oder indirekt auf das Rad und treibt das Rad und damit den Schlammwender an.

Vorteile bringt es mit sich, wenn die Anlage ein Zugmittel, insbesondere eine Kette, umfasst, das mit dem Antrieb des Schlammwenders in Wirkverbindung steht, wobei ein Betrieb des Antriebs eine Relativbewegung zwischen Schlammwender und Zugmittel zur Folge hat. Der Antriebsmotor weist ein Zahnrad auf, welches beispielsweise in die entlang der Trocknungsfläche verlegte, stationäre Kette, insbesondere eine Stahlgelenkkette, eingreift und den Schlammwender entlang der Kette bewegt.

Des Weiteren ist es vorteilhaft, wenn die Anlage zumindest eine, vorzugsweise sich entlang einer der Fahrwege erstreckende, Stromleitung aufweist, und dass der Schlammwender einen Stromabnehmer aufweist, der mit der Stromleitung in Wirkverbindung steht. Über die Stromleitung wird die Stromversorgung des Schlammwenders sichergestellt, sodass sowohl die Wendeeinrichtung als auch der Antrieb des Schlammwenders betrieben werden können.

Ferner ist Gegenstand der Erfindung die Verwendung eines verfahrbaren Schlammwenders in einer Anlage zum Trocknen von Schlamm auf einer Trocknungsfläche gemäß Anspruch 1. Der Schlammwender weist wenigstens ein erstes Rad und wenigstens ein zweites Rad auf, wobei die Räder an gegenüberliegenden Seiten einer gemeinsamen Brücke des Schlammwenders gelagert sind. Eine Wendeeinrichtung des Schlammwenders ist an der Brücke angeordnet. Eine Abtrennung zum Abtrennen der Räder von der Trocknungsfläche umfasst eine sich in einer Fahrtrichtung des Schlammwenders erstreckende erste Führung und eine sich in der Fahrtrichtung des Schlammwenders erstreckende zweite Führung. Der Schlammwender ist beim Verfahren mit Hilfe der Führungen quer zur Fahrtrichtung geführt. Die Führungen erstrecken sich ausgehend von einer Laufebene der Räder nach oben und dienen als Barriere für den auf der Trocknungsfläche ausgebreiteten Schlamm, um Schlamm von den Fahrwegen fernzuhalten. Bei den Führungen wird somit darauf verzichtet, diese zugleich als Fahrweg zu verwenden. Dementsprechend können Sie einfacher gestaltet sein und unabhängig von dem eigentlichen Fahrweg angeordnet werden. Der Schlammwender mit der Brücke und den Rädern sowie die Führungen bilden eine Einheit, welche auf einem nahezu beliebigen Untergrund betrieben werden kann. Die Führungen werden dabei auf dem Untergrund befestigt und dienen der Linearführung des Schlammwenders. Die Räder des Schlammwenders rollen auf einer Laufebene ab, welche sich unabhängig von den Führungen ebenfalls auf dem Untergrund befindet. Der Schlammwender und die Führungen können somit universell in Hallen montiert werden, welche für eine Schlammtrocknung vorgesehen sind. Besondere Ausgestaltungen des Hallenbodens zur Anpassung an den Schlammwender sind nicht erforderlich.

Ebenso bringt es Vorteile mit sich, wenn der Schlammwender zumindest eine Führungsrolle aufweist. Mit der zumindest einen Führungsrolle kann der Schlammwender an der Führung ausgerichtet und insbesondere linear geführt werden.

Vorteile bringt es zudem mit sich, wenn der Schlammwender zumindest ein Räumschild aufweist. Mit dem Räumschild wird sichergestellt, dass der zu wendende Schlamm in dem Bereich unter der Wendeeinrichtung bleibt, um zuverlässig gewendet und somit schnell und gleichmäßig getrocknet zu werden. Das Räumschild dient dabei dazu, dass randseitig liegender Schlamm auf die zentralere Trocknungsfläche geschoben wird und somit zuverlässig gewendet werden kann. Außerdem dient das Räumschild dazu, dass Schlamm daran gehindert wird, dass er auf die Führungen bzw. den Fahrweg fällt.

Auch ist es vorteilhaft, wenn der Schlammwender im Bereich des ersten Rads und im Bereich des zweiten Rads jeweils eine Schottwand aufweist. Die Schottwand dichtet die Führungen und den Fahrweg gegenüber dem Schlammbeet ab und stellt sicher, dass die Führungen und der Fahrweg weitgehend sauber bleiben. Die Schottwand wird zusammen mit dem Schlammwender verfahren und ist an dem Schlammwender innenseitig, unmittelbar neben dem im Betrieb des Schlammwenders vorhandenen Schlammbeet angeordnet.

Die Anlage zum Trocknen von Schlamm und der Schlammwender sind gemäß der vorangegangenen Beschreibung ausgebildet, wobei die genannten Merkmale einzeln oder in beliebiger Kombination vorhanden sein können.

Die vorliegende Erfindung, bei der die Fahrmauer ersetzt wird durch einen Anschlagswinkel als Führung ist besonders vorteilhaft, da ein Anschlagswinkel wesentlich günstiger ist als eine Fahrmauer. Auch sind die Vorgaben an den örtlichen Bau vereinfacht, da bei unsachgemäßer Montage der Anschlagswinkel eine Justierung möglich ist. Der Baufortschritt ist entzerrt, weil der Anschlagswinkel direkt nach dem Betonieren der Oberfläche oder auch erst nach der Maschinenlieferung eingebaut werden braucht. Die Umsetzung der Idee erfordert zusätzlich eine geänderte Brückenkonstruktion des Schlammwenders. Die Auflagerfläche der Räder und damit der Ort der Fixierung der Räder an der Maschine muss um die Höhe der ehemaligen Fahrmauer nach unten gesetzt werden. In einer besonders vorteilhaften Ausführung kann die Maschine den Schlamm zusammenräumen. Dies erfolgt beispielsweise durch einen Schiebeschlitten oder durch ein angepasstes Schlammwendewerkzeug. Die Fahrebene für die Räder ist vorzugsweise unterhalb der Schlammbeethöhe bzw. auf Höhe der Oberfläche, auf den das Schlammbeet geschüttet ist. Die Maschine ist selbstgängig, mit Strom betrieben und in fester Installation.

Der neue Schlammwender vollzieht die Verfahrung nicht mehr auf baulichen Fahrwänden, sondern direkt auf dem Boden. Vorzugsweise sind die Fahrebene des Schlammwenders und die Lagerfläche des umzulegenden Schlamms auf einer Höhe und deren Umlegewerkzeug ist breiter als 8m, vorzugsweise breiter als 10m.

Die Funktion der Mauer im Stand der Technik, die als Führungsanschlag, zur Ausbreitung der Gewichtskraft und als Zusammenhalt der Schlammschüttung dient, übernimmt jetzt die Maschine selbst. Vorteilhaft ist es, wenn eine Steuerung für den Ausgleich einer möglichen Schrägstellung, entsprechende Räder und/oder ein Schlammzusammenräummechanismus in der Maschine integriert ist.

Bei der erfindungsgemäßen Anlage sind vorteilhafterweise die Fahrebene und die Lagerfläche des umzulegenden Schlammmaterials auf einer Höhe und getrennt durch eine Abseiten-Konstruktion.

Die Abseiten-Konstruktion mit den Führungen wird vorzugsweise aus einzelnen Stücken zusammengesetzt, die nicht länger als 3 Meter sind. Eine zu erwartende Wärmeausdehnung der Abseiten-Konstruktion bzw. Führungen erfolgt in kurzen Fugen zwischen den einzelnen Stücken. Dies hat Vorteile für die seitlichen Rollen, um eine genaue Führung des Schlammwenders zu ermöglichen. Die Abseiten-Konstruktion besteht vorzugsweise aus Bauteilen, die einzeln weniger als 100 kg wiegen. Damit kann ein schneller Aufbau der Anlage erfolgen. Hierfür dient auch, dass vorzugsweise jedes Teilstück der Abseiten-Konstruktion über Dübel/Betonschrauben/Anker maximal 3-mal mit dem Boden verbunden ist.

Die Maschine ist vorzugsweise mit Reinigungsvorrichtungen, insbesondere Bürsten, ausgestattet, um mögliche Verschmutzungen der Fahrfläche zu säubern.

Der Schlammwender verfügt über eine Einrichtung, insbesondere eine Steuerung, welche beispielsweise aus der Position der Führungsrollen die IST-Ausrichtung des Schlammwenders erfasst und dementsprechend den Antrieb der Laufräder an den beiden Enden der Brücke unterschiedlich ansteuert. Hierdurch wird ein Schräglauf oder ein Abheben der Maschine überwacht und verhindert. Damit ist die Fahrrollenkonstruktion so ausgeführt, dass eine Parallelität der Fahrrollen eingestellt werden kann.

Bei einem Überschreiten des Fahrbahnendes wird der Schlammwender vorzugsweise über ein Not-Halt Signal oder einen mechanischen Anschlag gestoppt.

In einer besonders vorteilhaften Ausführung der Erfindung kann der Schlammwender in ein bestehendes Gewächshaus eingerollt oder hinausgerollt werden. Die Fahrrollen sind so beschaffen, dass die Maschine direkt auf Beton oder auf Asphalt rollen können.

Weitere Vorteile der Erfindung sind in den nachfolgenden Ausführungsbeispielen beschrieben. Es zeigt:
- **Figur 1**: eine Vorderansicht auf eine Anlage zum Trocknen von Schlamm mit einem Schlammwender,
- **Figur 2**: eine Draufsicht auf eine Anlage zum Trocknen von Schlamm mit einem Schlammwender und
- **Figur 3**: eine Seitenansicht auf einen Ausschnitt einer Anlage zum Trocknen von Schlamm mit einem Schlammwender.

Bei der nachfolgenden Beschreibung der dargestellten Ausführungsbeispiele werden für Merkmale, die in ihrer Ausgestaltung und/oder Wirkweise identisch und/oder zumindest vergleichbar sind, gleiche Bezugszeichen verwendet, auch wenn sie in unterschiedlichen Ausführungsbeispielen gezeigt sind. Sofern diese nicht nochmals detailliert erläutert werden, entspricht deren Ausgestaltung und/oder Wirkweise der Ausgestaltung und Wirkweise der vorstehend bereits beschriebenen Merkmale.

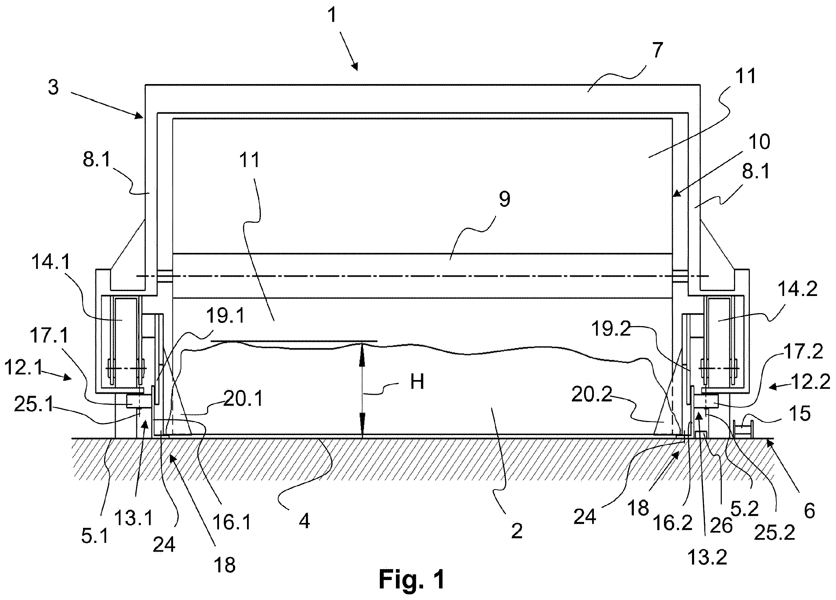

Figur 1 zeigt eine Vorderansicht auf eine Anlage 1 zum Trocknen von Schlamm 2 mit einem Schlammwender 3. Die Anlage 1 ist üblicherweise in einer Halle angeordnet. Der Schlamm 2 liegt mit einer Schlammbeethöhe H auf einer Trocknungsfläche 4. Die Trocknungsfläche 4 bildet zusammen mit zwei Fahrwegen 5.1 und 5.2 eine Bodenfläche 6 der Anlage 1. Die Trocknungsfläche 4 und die beiden Fahrwege 5.1 und 5.2 sind im Wesentlichen eben, insbesondere höhengleich ausgebildet. Damit ist es besonders einfach, die Bodenfläche 6 der Anlage 1 herzustellen, da der spätere Fahrweg 5.1 bzw. 5.2 bei der Herstellung der Bodenfläche 6 noch nicht berücksichtigt werden müssen.

Der Schlammwender 3 umfasst eine Brücke 7, welche zwischen zwei Gestellen 8.1 und 8.2 des Schlammwenders 3 befestigt ist. An der Brücke 7 bzw. an den Gestellen 8.1 und 8.2 ist eine Walze 9 mit einer Wendeeinrichtung 10 drehbar angeordnet. An der Walze 9 befinden sich bei diesem Ausführungsbeispiel zwei Schaufeln 11, welche abwechselnd in den Schlamm 2 eingreifen und diesen wenden, damit er gleichmäßig durchtrocknen kann.

An jedem der Gestelle 8.1 und 8.2 ist eine Antriebseinrichtung 12.1 und 12.2 und eine Führungseinrichtung 13.1 und 13.2 angeordnet. Die Antriebseinrichtung 12.1 und 12.2 umfasst zumindest ein erstes Rad 14.1 und ein zweites Rad 14.2. Das Rad 14.1 bzw. 14.2 rollt auf dem Fahrweg 5.1 bzw. 5.2 ab, welche die Laufebene für die Räder 14.1,14.2 bilden. Zumindest eine der Antriebseinrichtungen 12.1 und 12.2, hier die Antriebseinrichtung 12.2, umfasst weiterhin eine Kette 15 als Zugmittel, in welcher, wie später noch detaillierter beschrieben wird, ein motorischer Antrieb des Schlammwenders 3 eingreift und den Schlammwender 3 über die Fahrwege 5.1 bzw. 5.2 entlang der Trocknungsfläche 4 verfährt. Strom für den Betrieb des Schlammwenders 3 kann von einer Stromleitung 26 abgegriffen werden.

An beiden Seiten der Trocknungsfläche 4 ist eine der Führungseinrichtungen 13.1 und 13.2 angeordnet. Jede der Führungseinrichtungen 13.1 und 13.2 umfasst eine L-förmige, als Metallprofil ausgeführte Führung 16.1 bzw. 16.2, welche mit Schrauben 24 an der Bodenfläche 6 angeschraubt ist. Mit der Führung 16.1 bzw. 16.2 wirkt jeweils zumindest eine Führungsrolle 17.1 bzw. 17.2 zusammen, indem sie an der Führung 16.1 bzw. 16.2 anliegt und die Position des Schlammwenders 3 in Bezug auf die Trocknungsfläche 4 festlegt. Eine Drehachse 25.1 bzw. 25.2 der Führungsrolle 17.1 bzw. 17.2 ist in diesem Ausführungsbeispiel vertikal ausgerichtet. Sie kann aber auch allein bzw. zusammen mit der Führung 16.1 bzw. 16.2 geneigt zur Bodenfläche 6 ausgerichtet sein. Die Führungsrolle 17.1 bzw. 17.2 kann mit einer nicht dargestellten Steuerung zusammenwirken, welche Einfluss auf die zumindest eine Antriebseinrichtung 12.1 bzw. 12.2 nimmt und sicherstellt, dass der Schlammwender 3 möglichst genau quer zur Trocknungsfläche 4 verfährt. Hierfür können beispielsweise nicht dargestellte Sensoren verwendet werden, mit welchen der Andruck der Führungsrollen 17.1 bzw. 17.2 an die Führungen 16.1 bzw. 16.2 ermittelt und diese Information an die Steuerung weitergeben.

Die Führung 16.1 bzw. 16.2 bildet eine Abtrennung 18 zwischen der Trocknungsfläche 4 und den Fahrwegen 5.1 bzw. 5.2. Durch die Abtrennung 18 wird sichergestellt, dass kein Schlamm 2 von der Trocknungsfläche 4 auf den Fahrweg 5.1 bzw. 5.2 fällt und diesen verschmutzt. Damit auch bei einer Schlammbeethöhe H, welche höher als die Führung 16.1 bzw. 16.2 ist, kein Schlamm auf den Fahrweg 5.1 bzw. 5.2 fällt, ist eine Schottwand 19.1 bzw. 19.2 vorgesehen. Die Schottwand 19.1 bzw. 19.2 ist an dem Gestell 8.1 bzw. 8.2 angeordnet und verfährt zusammen mit dem Schlammwender 3 entlang der Trocknungsfläche 4. Die Schottwand 19.1 bzw. 19.2 ist höher als die maximale Schlammbeethöhe H und nur wenige Millimeter beabstandet zur Führung 16.1 bzw. 16.2 angeordnet und überlappt die Führung 16.1 bzw. 16.2. Die Schottwand 19.1 bzw. 19.2 schirmt damit zusammen mit der Führung 16.1 bzw. 16.2 die Fahrwege 5.1 bzw. 5.2 zuverlässig vor Verschmutzung ab.

Auf der zum Schlamm 2 hin gewandten Seite der Gestelle 8.1 und 8.2 sind Räumschilde 20.1 und 20.2 angeordnet. Mit den Räumschilden 20.1 und 20.2 wird sichergestellt, dass Schlamm 2 auf der Trocknungsfläche 4 verbleibt und nicht auf die Fahrwege 5.1 und 5.2 fällt. Schlamm 2, welcher beim Wenden in den Randbereich der Trocknungsfläche 4 gelangt, wird durch die Räumschilde 20.1 und 20.2 wieder in einen zentralen Bereich der Trocknungsfläche 4 geräumt.

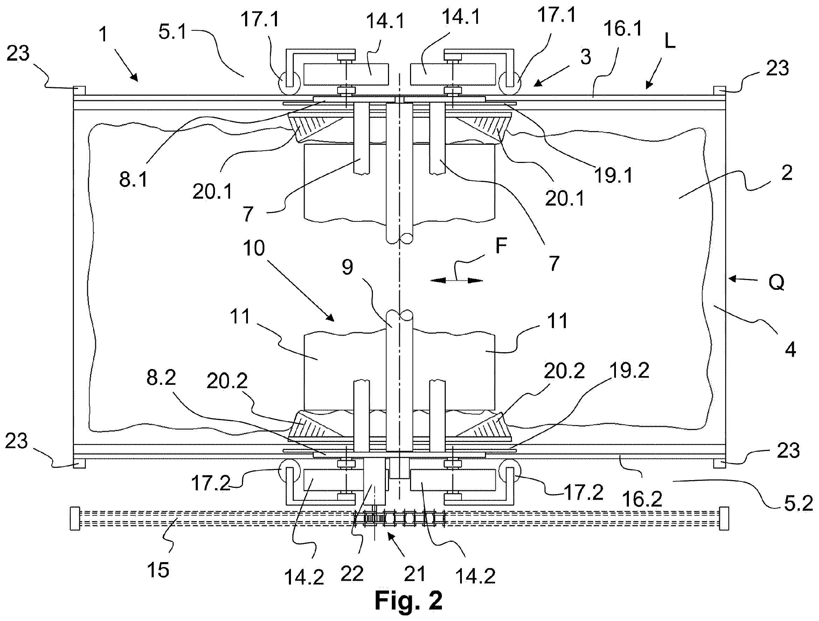

Figur 2 zeigt eine Draufsicht auf die Anlage 1 zum Trocknen von Schlamm 2 mit dem Schlammwender 3. Aus dieser Ansicht ist zu entnehmen, dass die Brücke 7 des Schlammwenders 3 zwei parallel verlaufende Balken umfasst, welche an den beiden Gestellen 8.1 und 8.2 befestigt sind. Die Brücke 7 überbrückt somit die Querseite der Trocknungsfläche 4, auf welcher der Schlamm 2 abgelegt ist.

An den Gestellen 8.1 und 8.2 ist außerdem die Wendeeinrichtung 10 angeordnet, welche die Walze 9 sowie zwei Schaufeln 11 umfasst. Damit der Schlamm 2 im Bereich der Schaufeln 11 bleibt und vollständig gewendet werden kann und um darüber hinaus sicherstellen zu können, dass der Schlamm 2 nicht in den Bereich des Fahrwegs 5.1 oder 5.2 fällt, sind die Räumschilde 20.1 und 20.2 vorgesehen. Nachdem der Schlammwender 3 für eine Fahrtrichtung F in beide Richtungen entlang einer Längsseite L der Trocknungsfläche 4 vorgesehen ist, sind Räumschilde 20.1 und 20.2 für jede der Fahrtrichtungen F vorteilhaft.

Zur seitlichen Abgrenzung der Trocknungsfläche 4 sind die Führungen 16.1 und 16.2 vorgesehen. Die Führungen 16.1 und 16.2 wirken mit den Schottwänden 19.1 und 19.2 zusammen, welche mit nur wenigen Millimetern Abstand so nahe an den Führungen 16.1 und 16.2 angeordnet sind, sodass Schlamm 2 daran gehindert wird, auf die Fahrwege 5.1 und 5.2 beim Wenden durch die Wendeeinrichtung 10 zu fallen. Die Schottwände 19.1 und 19.2 verfahren zusammen mit dem Schlammwender 3, wodurch die Abschottung stets an der Stelle, an welcher die Gefahr, dass Schlamm 2 auf die Fahrwege 5.1 oder 5.2 fallen könnte, am größten ist.

An den Gestellen 8.1 und 8.2 sind weiterhin die Räder 14.1 und 14.2 sowie die Führungsrollen 17.1 und 17.2 angeordnet. Auf jedem Fahrweg 5.1 und 5.2 weist der Schlammwender 3 jeweils zwei der Räder 14.1 und 14.2 und Führungsrollen 17.1 und 17.2 auf. Damit wird eine stabile Positionierung und Fahrt des Schlammwenders 3 erreicht. Die Führungsrollen 17.1 und 17.2 stützen sich an den Führungen 16.1 bzw. 16.2 derart ab, dass der Schlammwender 3 stets im Wesentlichen quer zur Trocknungsfläche 4 ausgerichtet ist. Sie können mit einer nicht dargestellten Steuerung zusammenwirken, welche bei einer Schrägstellung des Schlammwenders 3 in Bezug auf die Querrichtung Q der Trocknungsfläche 4 einen Ausgleich im Antrieb des Schlammwenders 3 bewirkt, sodass die Ausrichtung entsprechend korrigiert wird.

Das Verfahren des Schlammwenders 3 erfolgt mit einem Antrieb 21, welcher einen Motor 22 umfasst, der an dem Gestell 8.1 angeordnet ist. Der Motor 22 greift in die Kette 15 ein, welche als Zugmittel dient. Der Schlammwender 3 wird hierdurch entlang der Kette 15 bewegt. Zur Fahrtrichtungsumkehr wird die Drehrichtung des Motors 22 geändert. Die Kette 15 ist stationär neben dem Fahrweg 5.1 angeordnet. Es wäre aber ebenso möglich, dass ein zweiter Antrieb 21 mit einer zweiten Kette 15 auf der gegenüberliegenden Seite, außerhalb des Fahrwegs 5.2 vorgesehen ist.

Um zu verhindern, dass der Schlammwender 3 über die Trocknungsfläche 4 hinausfährt, ist jeweils am Ende der Trocknungsfläche 4 bzw. der Fahrwege 5.1 und 5.2 ein mechanischer oder elektrischer Anschlag 23 vorgesehen. Sobald der Schlammwender 3 den Anschlag 23 erreicht, bleibt er stehen bzw. ändert seine Fahrtrichtung F.

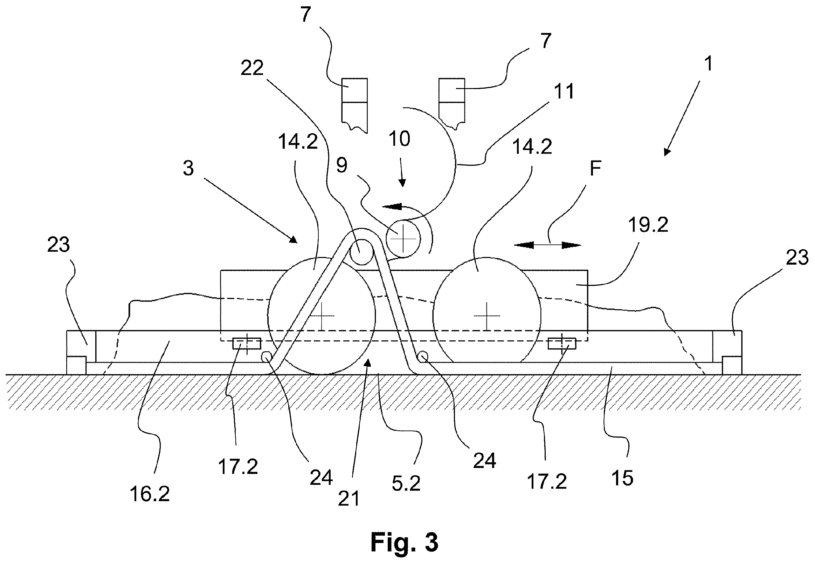

Figur 3 zeigt eine Seitenansicht auf einen Ausschnitt der Anlage 1 zum Trocknen von Schlamm 2 mit dem Schlammwender 3. Es ist daraus ersichtlich, dass die Brücke 7 derart angeordnet ist, dass die Schaufeln 11 der Wendeeinrichtung 10 unterhalb der Brücke 7 mit der Walze 9 drehbar sind. Das Schott 19.2 überlappt in vertikaler Richtung die Führung 16.2 um mehrere, vorzugsweise mehr als 2 Zentimeter, sodass eine Abschottung des Bereichs auf der Trocknungsfläche 4 und dem Fahrweg 5.2 im Bereich der Wendeeinrichtung 10 erfolgt. Die beiden Räder 14.2 rollen als Lauffläche auf dem Fahrweg 5.2 ab. Der Antrieb 21 umfasst den Motor 22, welche in die Kette 15 eingreift. Die Kette 15 ist stationär neben dem Fahrweg 5.2 verlegt, vor und hinter dem Motor 22 allerdings mit Umlenkungen von dem Fahrweg 5.2 abgehoben und zu dem Motor 22 hoch geführt. Durch eine Drehung einer Welle mit einem Antriebsrad des Motors 22 wird der Schlammwender 3 in Fahrtrichtung F verfahren. An den Endbereichen der Führung 16.2 ist jeweils der Anschlag 23 angeordnet, welcher die Fahrt des Schlammwenders 3 stoppt.

Selbstverständlich sind auch andere Arten des Antriebs des Schlammwenders 3 möglich. So kann beispielsweise ein direkter Antrieb der Räder 14.1 bzw. 14.2 mit jeweils einem Motor erfolgen. Ebenso ist es möglich, dass die Wendeeinrichtung 10 anders als mit dem hier dargestellten Schaufeln 11 ausgebildet ist. Wesentlich ist, dass ein Wenden des Schlamms 2 gleichmäßig erfolgt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Anlage
- 2: Schlamm
- 3: Schlammwender
- 4: Trocknungsfläche
- 5: Fahrweg
- 6: Bodenfläche
- 7: Brücke
- 8: Gestell
- 9: Walze
- 10: Wendeeinrichtung
- 11: Schaufel
- 12: Antriebseinrichtung
- 13: Führungseinrichtung
- 14: Rad
- 15: Kette
- 16: Führung
- 17: Führungsrolle
- 18: Abtrennung
- 19: Schottwand
- 20: Räumschild
- 21: Antrieb
- 22: Motor
- 23: Anschlag
- 24: Schraube
- 25: Drehachse
- 26: Stromleitung

- L: Längsseite
- H: Schlammbeethöhe
- F: Fahrtrichtung
- Q: Querrichtung

## Patentansprüche

1. Anlage zum Trocknen von Schlamm (2), insbesondere von Klärschlamm, der bei der Abwasserbehandlung anfällt,
- wobei die Anlage eine, vorzugsweise rechteckige, Trocknungsfläche (4) zur flächigen Aufnahme des Schlamms (2) umfasst,
- wobei die Anlage (1) einen verfahrbaren Schlammwender (3) umfasst, der ausgebildet ist, den auf der Trocknungsfläche (4) ausgebreiteten Schlamm (2) zu wenden und hierbei zu durchmischen,
- wobei die Anlage einen ersten Fahrweg (5.1) und einen zweiten Fahrweg (5.2) aufweist, wobei die beiden Fahrwege (5.1, 5.2) zumindest teilweise auf gegenüberliegenden Längsseiten (L) der Trocknungsfläche (4) verlaufen und durch eine Abtrennung (18) von der Trocknungsfläche (4) abgetrennt sind,
- wobei der Schlammwender (3) wenigstens ein erstes Rad (14.1) und wenigstens ein zweites Rad (14.2) aufweist, wobei die Räder (14.1, 14.2) an gegenüberliegenden Seiten einer gemeinsamen Brücke (7) des Schlammwenders (3) gelagert sind, welche die Trocknungsfläche (4) in einer Querrichtung (Q) der Trocknungsfläche (4) überspannt, und
- wobei beim Betrieb des Schlammwenders (3) das erste Rad (14.1) auf dem ersten Fahrweg (5.1) und das zweite Rad (14.2) auf dem zweiten Fahrweg (5.1) als jeweilige Laufebene abrollt, wobei die Abtrennung (18) im Bereich des ersten Fahrwegs (5.1) eine sich in einer Fahrtrichtung (F) des Schlammwenders (3) erstreckende erste Führung (16.1) und im Bereich des zweiten Fahrwegs (5.2) eine sich in der Fahrtrichtung (F) des Schlammwenders (3) erstreckende zweite Führung (16.1) umfasst, wobei der Schlammwender (3) beim Verfahren mit Hilfe der Führungen (16.1, 16.2) quer zur Fahrtrichtung (F) geführt ist, und wobei sich die Führungen (16.1, 16.2) ausgehend von der Trocknungsfläche (4) nach oben erstrecken und als Barriere für den auf der Trocknungsfläche (4) ausgebreiteten Schlamm (2) dienen, um Schlamm (2) von den Fahrwegen (5.1, 5.2) fernzuhalten, wobei die Führungen (16.1, 16.2) jeweils durch ein ein- oder mehrteiliges Metallprofil gebildet sind, welches mit einer Bodenfläche (6) einer Solartrocknungshalle verbunden ist, und wobei die Bodenfläche (6) Teil der Anlage (1) ist und die Trocknungsfläche (4) und die Fahrwege (5.1, 5.2) bildet.

2. Anlage gemäß dem vorangegangenen Anspruch, **dadurch gekennzeichnet, dass** das Metallprofil mit der Bodenfläche (6) verschraubt ist.

3. Anlage gemäß einem der vorangegangenen Ansprüche, **dadurch gekennzeichnet, dass** das Metallprofil einen im Wesentlichen L-förmigen Querschnitt aufweist.

4. Anlage gemäß einem der vorangegangenen Ansprüche, **dadurch gekennzeichnet, dass** die Trocknungsfläche (4) und die Fahrwege (5.1, 5.2) in derselben Ebene liegen, wobei die Ebene vorzugsweise eine vertikal verlaufende Normale aufweist.

5. Anlage gemäß einem der vorangegangenen Ansprüche, **dadurch gekennzeichnet, dass** der Schlammwender (3) eine erste Führungsrolle (17.1) aufweist, mit der er während des Verfahrens an der ersten Führung (16.1) anliegt und/oder der Schlammwender (3) eine zweite Führungsrolle (17.2) aufweist, mit der er während des Verfahrens an der zweiten Führung (16.2) anliegt, wobei die Führungsrollen (17.1, 17.2) vorzugsweise jeweils eine vertikal oder schräg zur Vertikalen verlaufende Drehachse (25) aufweisen.

6. Anlage gemäß einem der vorangegangenen Ansprüche, **dadurch gekennzeichnet, dass** der Schlammwender (3) im Bereich des ersten Rads (14.1) und im Bereich des zweiten Rads (14.2) jeweils eine Schottwand (19.1, 19.2) aufweist, die in vertikaler Richtung mit jeweils einer der Führungen (16.1, 16.2) überlappen und in horizontaler Richtung einen Abstand zur jeweils benachbarten Führung (16.1, 16.2) aufweisen, dessen Betrag vorzugsweise zwischen 1 mm und 30 mm, insbesondere zwischen 3 mm und 20 mm, beträgt.

7. Anlage gemäß Anspruch 6, **dadurch gekennzeichnet, dass** die Schottwände (19.1, 19.2) in einer quer zur Fahrtrichtung (F) des Schlammwenders (3) verlaufenden Richtung zwischen den Führungen (16.1, 16.2) angeordnet sind.

8. Anlage gemäß Anspruch 5 und Ansprüche 6 oder 7, **dadurch gekennzeichnet, dass** jeweils eine Führung (16.1, 16.2) zwischen einer Führungsrolle (17.1, 17.2) und einer Schottwand (19.1, 19.2) verläuft.

9. Anlage gemäß einem der vorangegangenen Ansprüche, **dadurch gekennzeichnet, dass** der Schlammwender (3) zumindest ein Räumschild (20) zum Bewegen des sich auf der Trocknungsfläche (4) befindlichen Schlamms (2) aufweist.

10. Anlage gemäß dem vorangegangenen Anspruch, **dadurch gekennzeichnet, dass** der Schlammwender (3) einen Antrieb (21) aufweist, welcher insbesondere mit wenigstens einem Rad (14.1, 14.2) in Wirkverbindung steht, um eine Bewegung des Schlammwenders (3) zu bewirken.

11. Anlage gemäß Anspruch 10, **dadurch gekennzeichnet, dass** die Anlage (1) ein Zugmittel umfasst, das mit dem Antrieb (21) des Schlammwenders (3) in Wirkverbindung steht, wobei ein Betrieb des Antriebs (21) eine Relativbewegung zwischen Schlammwender (3) und Zugmittel zur Folge hat.

12. Anlage gemäß einem der vorangegangenen Ansprüche, **dadurch gekennzeichnet, dass** die Anlage zumindest eine, vorzugsweise sich entlang einer der Fahrwege (5.1, 5.2) erstreckende, Stromleitung (26) aufweist, und dass der Schlammwender (3) einen Stromabnehmer aufweist, der mit der Stromleitung (26) in Wirkverbindung steht.

13. Verwendung eines verfahrbaren Schlammwenders in einer Anlage (1) zum Trocknen von Schlamm (2) auf einer Trocknungsfläche (4) gemäß einem oder mehreren der vorherigen Ansprüche.

14. Verwendung nach dem vorherigen Anspruch, **dadurch gekennzeichnet, dass** der Schlammwender (3) zumindest eine Führungsrolle (17.1, 17.2) aufweist, und/oder dass der Schlammwender (3) zumindest ein Räumschild (20) aufweist, und/oder dass der Schlammwender (3) im Bereich des ersten Rads (14.1) und im Bereich des zweiten Rads (14.2) jeweils eine Schottwand (19) aufweist.

## Claims

1. A system for drying sludge (2), in particular sewage sludge generated during wastewater treatment,
- wherein the system comprises a, preferably rectangular, drying surface (4) for accommodating the sludge (2) over a flat area,
- wherein the system (1) comprises a movable sludge turner (3) adapted to turn and mix the sludge (2) spread on the drying surface (4),
- wherein the system has a first travel path (5.1) and a second travel path (5.2), wherein the two travel paths (5.1, 5.2) extend at least partially on opposing longitudinal sides (L) of the drying surface (4) and are separated from the drying surface (4) by a barrier (18),
- wherein the sludge turner (3) has at least one first wheel (14.1) and at least one second wheel (14.2), wherein the wheels (14.1, 14.2) are supported on opposite sides of a common gantry (7) of the sludge turner (3), which spans the drying surface (4) in a transverse direction (Q) of the drying surface (4), and
- wherein the first wheel (14.1) rolls on the first travel path (5.1) and the second wheel (14.2) rolls on the second travel path (5.1) as the respective travel plane when the sludge turner (3) is in operation,
wherein
the barrier (18) comprises a first guide (16.1) in the area of the first travel path (5.1) extending in the direction of travel (F) of the sludge turner (3) and a second guide (16.1) in the area of the second travel path (5.2) extending in the direction of travel (F) of the sludge turner (3), wherein the sludge turner (3) - as the latter travels - is guided transversely to the direction of travel (F) with the aid of the guides (16.1, 16.2), and wherein the guides (16.1, 16.2) extend upwards from the drying surface (4) and act as a barrier for the sludge (2) spread on the drying surface (4), to keep sludge (2) away from the travel paths (5.1, 5.2), wherein the guides (16.1, 16.2) are each formed by a single or multi-part metal profile that is connected to a floor surface (6) of a solar drying hall, and wherein the floor surface (6) is part of the system (1) and forms the drying surface (4) and the travel paths (5.1, 5.2).

2. The system according to the preceding claim, **characterized in that** the metal profile is screwed to the floor surface (6).

3. The system according to any of the preceding claims, **characterized in that** the metal profile has an essentially L-shaped cross-section.

4. The system according to any of the preceding claims, **characterized in that** the drying surface (4) and the travel paths (5.1, 5.2) are on the same plane, wherein the plane preferably has a vertically extending normal.

5. The system according to any of the preceding claims, **characterized in that** the sludge turner (3) comprises a first guide roller (17.1), by which the sludge turner (3) contacts the first guide (16.1) while traveling and/or the sludge turner (3) comprises a second guide roller (17.2), by which the sludge turner (3) contacts the second guide (16.2) while traveling, wherein the axis of rotation (25) of each of the guide rollers (17.1, 17.2) extends vertically or at an angle to the vertical.

6. The system according to any of the preceding claims, **characterized in that** the sludge turner (3) in the region of the first wheel (14.1) and in the region of the second wheel (14.2) respectively has a bulkhead (19.1, 19.2), which in vertical direction respectively overlap with one of the guides (16.1, 16.2) and in horizontal direction has a distance to the respectively adjacent guide (16.1, 16.2), the amount of which is preferably between 1 mm and 30 mm, in particular between 3 mm and 20 mm.

7. The system according to claim 6, **characterized in that** the bulkheads (19.1, 19.2) are arranged between the guides (16.1, 16.2) in a direction extending transverse to the direction of travel (F) of the sludge turner (3).

8. The system according to claim 5 and 6 or 7, **characterized in that** respectively one guide (16.1, 16.2) extends between a guide roller (17.1, 17.2) and a bulkhead (19.1, 19.2).

9. The system according to any of the preceding claims, **characterized in that** the sludge turner (3) comprises at least one pusher plate (20) for moving the sludge (2) located on the drying surface (4).

10. The system according to the preceding claim, **characterized in that** the sludge turner (3) comprises a drive (21) that is in particular in operative connection with at least one wheel (14.1, 14.2) in order to cause a movement of the sludge turner (3).

11. The system according to claim 10, **characterized in that** the system (1) comprises a traction means that is in operative connection with the drive (21) of the sludge turner (3), wherein an operation of the drive (21) results in a relative movement between the sludge turner (3) and the traction means.

12. The system according to any of the preceding claims, **characterized in that** the system comprises at least one electrical power cable (26), preferably extending along one of the travel paths (5.1, 5.2), and **in that** the sludge turner (3) comprises a power pickup that is in operative connection with the electrical power cable (26).

13. Use of a movable sludge turner for a system (1) for drying sludge (2) on a drying surface (4) according to any or several of the preceding claims.

14. The Use according to the preceding claim, **characterized in that** the sludge turner (3) comprises at least one guide roller (17.1, 17.2) and/or the sludge turner (3) comprises at least one pusher plate (20), and/or the sludge turner (3) comprises a bulkhead (19) in the region of the first wheel (14.1) and in the region of the second wheel (14.2).

## Revendications

1. Installation pour sécher de la boue (2), en particulier de la boue d'épuration, qui est produite lors du traitement des eaux usées,
- l'installation comprenant une surface de séchage (4), de préférence rectangulaire, pour la réception à plat de la boue (2),
- l'installation (1) comprenant un tourneur de boue (3) mobile, qui est conçu pour tourner et mélanger la boue (2) étalée sur la surface de séchage (4),
- l'installation présentant un premier trajet (5.1) et un deuxième trajet (5.2), les deux trajets (5.1, 5.2) s'étendant au moins en partie sur des côtés longitudinaux opposés (L) de la surface de séchage (4) et étant séparés de la surface de séchage (4) par une séparation (18),
- le tourneur de boue (3) présentant au moins une première roue (14.1) et au moins une deuxième roue (14.2), les roues (14.1, 14.2) étant montées sur des côtés opposés d'un pont commun (7) du tourneur de boue (3), lequel pont recouvre la surface de séchage (4) dans une direction transversale (Q) de la surface de séchage (4), et
- lors du fonctionnement du tourneur de boue (3), la première roue (14.1) roulant sur le premier trajet (5.1) et la deuxième roue (14.2) roulant sur le deuxième trajet (5.1) en tant que plan de roulement respectif,
dans laquelle
la séparation (18) comprend, dans la région du premier trajet (5.1), un premier guidage (16.1) s'étendant dans une direction de déplacement (F) du tourneur de boue (3) et, dans la région du deuxième trajet (5.2), un deuxième guidage (16.1) s'étendant dans la direction de déplacement (F) du tourneur de boue (3), le tourneur de boue (3) étant guidé transversalement à la direction de déplacement (F) pendant le déplacement à l'aide des guidages (16.1, 16.2), et les guidages (16.1, 16.2) s'étendant vers le haut à partir de la surface de séchage (4) et servant de barrière pour la boue (2) étalée sur la surface de séchage (4), afin de maintenir la boue (2) à l'écart des trajets (5.1, 5.2), les guidages (16.1, 16.2) étant à chaque fois formés par un profilé métallique en une ou plusieurs parties, qui est connecté à une surface de sol (6) d'un hall de séchage solaire, et la surface de sol (6) faisant partie de l'installation (1) et formant la surface de séchage (4) et les trajets (5.1, 5.2).

2. Installation selon la revendication précédente, **caractérisée en ce que** le profilé métallique est vissé à la surface de sol (6).

3. Installation selon l'une quelconque des revendications précédentes, **caractérisée en ce que** le profilé métallique présente une section transversale sensiblement en forme de L.

4. Installation selon l'une quelconque des revendications précédentes, **caractérisée en ce que** la surface de séchage (4) et les trajets (5.1, 5.2) se situent dans le même plan, le plan présentant de préférence une normale s'étendant verticalement.

5. Installation selon l'une quelconque des revendications précédentes, **caractérisée en ce que** le tourneur de boue (3) présente un premier rouleau de guidage (17.1) avec lequel il s'applique contre le premier guidage (16.1) pendant le déplacement et/ou le tourneur de boue (3) présente un deuxième rouleau de guidage (17.2) avec lequel il s'applique contre le deuxième guidage (16.2) pendant le déplacement, les rouleaux de guidage (17.1, 17.2) présentant de préférence à chaque fois un axe de rotation (25) s'étendant verticalement ou obliquement par rapport à la verticale.

6. Installation selon l'une quelconque des revendications précédentes, **caractérisée en ce que** le tourneur de boue (3) présente dans la région de la première roue (14.1) et dans la région de la deuxième roue (14.2) à chaque fois une paroi de séparation (19.1, 19.2), qui se chevauchent dans la direction verticale à chaque fois avec l'un des guidages (16.1, 16.2) et présentent dans la direction horizontale une distance par rapport au guidage (16.1, 16.2) à chaque fois adjacent, dont la valeur est de préférence comprise entre 1 mm et 30 mm, en particulier entre 3 mm et 20 mm.

7. Installation selon la revendication 6, **caractérisée en ce que** les parois de séparation (19.1, 19.2) sont disposées dans une direction s'étendant transversalement à la direction de déplacement (F) du tourneur de boue (3) entre les guidages (16.1, 16.2).

8. Installation selon la revendication 5 et 6 ou 7, **caractérisée en ce qu'**à chaque fois un guidage (16.1, 16.2) s'étend entre un rouleau de guidage (17.1, 17.2) et une paroi de séparation (19.1, 19.2).

9. Installation selon l'une quelconque des revendications précédentes, **caractérisée en ce que** le tourneur de boue (3) présente au moins une lame de déblayage (20) pour déplacer la boue (2) se trouvant sur la surface de séchage (4).

10. Installation selon la revendication précédente, **caractérisée en ce que** le tourneur de boue (3) présente un entraînement (21), qui est en liaison fonctionnelle en particulier avec au moins une roue (14.1, 14.2), afin de provoquer un déplacement du tourneur de boue (3).

11. Installation selon la revendication 10, **caractérisée en ce que** l'installation (1) comprend un moyen de traction, qui est en liaison fonctionnelle avec l'entraînement (21) du tourneur de boue (3), un fonctionnement de l'entraînement (21) entraînant un déplacement relatif entre le tourneur de boue (3) et le moyen de traction.

12. Installation selon l'une quelconque des revendications précédentes, **caractérisée en ce que** l'installation présente au moins une ligne électrique (26), s'étendant de préférence le long de l'un des trajets (5.1, 5.2), et **en ce que** le tourneur de boue (3) présente un pantographe, qui est en liaison fonctionnelle avec la ligne électrique (26).

13. Usage d'un tourneur de boue déplaçable dans une installation (1) pour sécher de la boue (2) sur une surface de séchage (4) selon l'une quelconque ou plusieurs des revendications précédentes.

14. Usage selon la revendication précédente, **caractérisé en ce que** le tourneur de boue (3) présente au moins un rouleau de guidage (17.1, 17.2), et/ou **en ce que** le tourneur de boue (3) présente au moins une lame de déblayage (20), et/ou **en ce que** le tourneur de boue (3) présente dans la région de la première roue (14.1) et dans la région de la deuxième roue (14.2) à chaque fois une paroi de séparation (19).
